# FASCICULE DE BREVET EUROPEEN

(11) **EP 4 169 779 B1**
(45) Date de publication et mention de la délivrance du brevet: **03.09.2025**
(21) Numéro de dépôt: 22197035.3
(22) Date de dépôt: 22.09.2022
(51) Int. Cl.: B60T 7/10, B62L 3/02, B60T 7/08

(54) **SYSTÈME DE FREIN À MAIN**
HANDBREMSSYSTEM
HAND BRAKE SYSTEM

(30) Priorité: 20.10.2021 FR 2111136
(43) Date de publication de la demande: 26.04.2023
(73) Titulaire: Renault s.a.s, 92100 Boulogne Billancourt (FR)
(72) Inventeur: HENNEBICQ, Guillaume, 78084 GUYANCOURT CEDEX (FR); Rollet, Remi, 78084 GUYANCOURT CEDEX (FR)

(56) Documents cités:
- EP-A1- 1 607 296
- EP-A1- 3 294 596
- EP-A2- 2 962 912
- DE-A1- 3 324 628
- DE-A1- 3 806 475
- GB-A- 1 428 230
- US-A- 4 977 792

## Description

La présente invention concerne un système de frein à main.

Un tel système comprend un câble de frein à main, qui est actionné directement par un levier. Actuellement, un contacteur de frein à main permet juste de savoir si le levier d'actionnement est en position rentrée ou tirée, sans information précise sur sa position exacte. Il en découle qu'il n'existe aucune information tangible sur l'effort réel exercé par le câble de frein à main.

Un tel frein à main est montré par le document EP 1 607 296 A1.

Pour pallier ce manque d'information, il pourrait être envisagé de placer un capteur de déplacement sur le levier, dans la zone où le câble est habituellement serré, vers la moitié de la course. Or, cette position étant dispersée, on peut difficilement être sûr que le véhicule est correctement immobilisé avec un capteur de position sur le levier.

Un système de frein à main selon l'invention est conçu de manière à restituer une information sûre et fiable sur le fait que le véhicule soit correctement immobilisé une fois que ledit système a été actionné.

L'invention a pour objet un système de frein à main d'un véhicule comprenant un levier d'actionnement monté en rotation autour d'un premier axe de rotation solidaire d'un élément de structure du véhicule, un câble de frein à main et un dispositif de freinage, ledit câble étant relié au dispositif de freinage et étant apte à être mis sous tension mécanique sous l'effet d'une mise en rotation du levier d'actionnement autour du premier axe, caractérisé en ce que :
- il comprend une pièce relais montée en rotation autour d'un deuxième axe de rotation et maintenue en appui contre une butée de repos solidaire du levier d'actionnement au moyen d'un élément de rappel précontraint, ladite pièce relais étant maintenue à distance d'une butée de serrage solidaire dudit levier d'actionnement au moyen dudit élément de rappel,
- le câble relie le dispositif de freinage à la pièce relais, qui est dans un premier état d'interaction avec un contacteur,
- le levier d'actionnement est apte à être mis en rotation pour assurer une opération de freinage, en entrainant une mise en rotation simultanée de la pièce relais qui est insérée entre l'élément de rappel précontraint et la butée de repos, ladite mise en rotation étant destinée à engendrer une première mise sous tension mécanique du câble de frein sans résistance, puis une deuxième mise sous tension mécanique dudit câble entrainant un arrêt de la rotation de la pièce relais alors que le levier d'actionnement poursuit sa rotation, de manière à engendrer une mise en appui de la pièce relais contre la butée de serrage s'accompagnant d'une compression de l'élément de rappel précontraint, et d'un deuxième état d'interaction de la pièce relais avec le contacteur.

Le principe d'un système de frein à main selon l'invention est de s'appuyer sur la tension mécanique réelle qui est appliquée au câble de frein à main, pour savoir si l'activation du système de frein à main a été efficace. En effet, par défaut, c'est-à-dire lorsque le système de frein à main n'est pas activé, la pièce relais est dans un premier état d'interaction avec le contacteur, cet état d'interaction correspondant, soit à une mise en appui de la pièce relais contre le contacteur, soit à un éloignement de ladite pièce relais dudit contacteur. Lorsque ce système de frein à main est activé par une mise en rotation du levier d'actionnement, le câble se tend provoquant l'arrêt en rotation de la pièce relais autour du deuxième axe de rotation alors que le levier d'actionnement poursuit sa rotation. Cette situation engendre alors une compression de l'élément de rappel précontraint et un deuxième état d'interaction de la pièce relais avec le contacteur, qui envoie alors un signal signifiant que le système de frein à main a été correctement activé. Autrement dit, si le premier état d'interaction est une mise en appui de la pièce relais contre le contacteur, le deuxième état d'interaction correspond alors à un éloignement de ladite pièce relais dudit contacteur. Inversement, si le premier état d'interaction correspond à un éloignement entre ces éléments, alors le deuxième état d'interaction correspond à une mise en appui de la pièce relais contre ledit contacteur. Il est à préciser que lorsque la pièce relais s'éloigne du contacteur, il n'existe plus aucun contact mécanique entre ces deux éléments. Préférentiellement, l'élément de rappel précontraint fournit un effort calibré permettant d'obtenir un effort dans le câble de frein à main, à partir duquel on veut que le contacteur soit actionné. De cette manière, on est sûr que le système de frein à main a été correctement activé. Il est à noter que dans le fonctionnement d'un système de frein à main selon l'invention, il existe une phase intermédiaire située entre une position de repos et une position d'activation, au cours de laquelle la pièce relais pivote concomitamment avec le levier d'actionnement et le câble commence à se tendre sans résistance sans induire une phase de freinage. Avantageusement, l'élément de rappel précontraint est un ressort, et de façon encore plus avantageuse, un ressort à spirales. Les butées de repos et de serrage sont préférentiellement des excroissances solides. Avantageusement, la pièce relais est une pièce solide monobloc, réalisée dans un même matériau.

Selon une caractéristique possible de l'invention, le deuxième axe est confondu avec le premier axe, de sorte que le levier d'actionnement et la pièce relais pivotent autour du même axe. **Il** est à noter que la pièce relais et le levier d'actionnement sont montés en rotation autour de l'axe de rotation de façon indépendante, sauf si temporairement des éléments du levier d'actionnement viennent en appui contre la pièce relais. Cette configuration correspondant à un axe unique autour duquel pivoteraient la pièce relais et le levier d'actionnement, favorise une certaine compacité du système de frein à main ainsi qu'une diminution des coûts en raison notamment d'un nombre plus limité de pièces à fabriquer.

Selon une caractéristique possible de l'invention, le contacteur est un capteur de position électrique comportant un ergot mobile entre une position rentrée et une position déployée. Avantageusement, cet ergot est monté dans le contacteur avec un élément précontraint conçu pour maintenir par défaut ledit ergot dans la position déployée.

Selon une caractéristique possible de l'invention, lorsque ledit système n'est pas activé, la pièce relais est en contact avec l'ergot en le maintenant dans la position rentrée, et lorsque ledit système est activé pour assurer une opération de freinage, la pièce relais s'éloigne de l'ergot permettant à celui-ci d'occuper la position déployée. Au repos, la pièce relais est en contact avec l'ergot en le maintenant dans la position rentrée. Lorsque le système de frein à main est actionné et qu'il immobilise efficacement le véhicule sur une voie de circulation ou un parking, la pièce relais pivote indépendamment du levier d'actionnement, en s'éloignant de l'ergot du contacteur au point de ne plus être en contact avec celui-ci. Dans ce dernier cas, la perte de contact entre la pièce relais et l'ergot du contacteur, se traduit par un signal émis par ledit contacteur, signifiant que le système de frein à main exerce efficacement une fonction d'immobilisation du véhicule.

Selon une caractéristique possible de l'invention, la pièce relais présente un corps principal allongé et une extension qui est inclinée par rapport audit corps, ladite extension interagissant avec le contacteur. Autrement dit c'est cette extension de la pièce relais qui est amenée à venir au contact ou non du contacteur.

Selon une caractéristique possible de l'invention, l'élément de rappel précontraint est un ressort dont une première extrémité est en appui contre la pièce relais et dont une deuxième extrémité est en appui contre une butée d'arrêt solidarisée au levier d'actionnement. De cette manière, le levier d'actionnement comprend trois butées fixes : la butée de repos, la butée de serrage et la butée d'arrêt. Préférentiellement, ces trois butées sont distinctes. Le ressort est inséré entre une pièce fixe du levier d'actionnement, à savoir la butée d'arrêt, et la pièce relais mobile en rotation.

Selon une caractéristique possible de l'invention, la butée de repos et la butée de serrage sont solidarisées au levier d'actionnement de manière à garantir plus facilement que ces butées aient des appuis sensiblement plans sur les surfaces en regard sur la pièce relais

Selon une caractéristique possible de l'invention, la butée d'arrêt est sensiblement parallèle à un bord longitudinal de la pièce relais contre lequel le ressort vient en appui lorsque le levier a pivoté pour assurer une opération de freinage. Le terme « sensiblement parallèle » signifie « parallèle à plus ou moins 5° ».

Selon une caractéristique possible de l'invention, le levier d'actionnement présente deux segments perpendiculaires, dont un premier segment sert uniquement d'élément de préhension et dont un deuxième segment permet une mise en œuvre de la fonction de freinage par l'intermédiaire de la pièce relais. Préférentiellement, le premier segment est lisse et peut présenter des formes destinées à faciliter une prise en main du levier d'actionnement. Le deuxième segment est monté en rotation autour du premier axe, et comprend tous les éléments nécessaires à la mise en œuvre du système de freinage selon l'invention, parmi lesquels les différentes butées de serrage, de repos et d'arrêt, l'élément de rappel précontraint, la pièce relais, etc.

L'invention a pour autre objet un procédé d'activation d'un système de frein à main selon l'invention.

Selon l'invention, le procédé comprend les étapes suivantes :
- une étape d'inactivation du système de frein à main pour laquelle la pièce relais est en appui contre la butée de repos et contre le contacteur,
- une étape de mise en rotation du levier d'actionnement autour du premier axe de rotation, entrainant une mise en rotation simultanée de la pièce relais qui est insérée entre l'élément de rappel précontraint et la butée de repos, ladite étape s'accompagnant d'une tension du câble de frein sans contrainte,
- une étape de poursuite de la mise en rotation du levier d'actionnement s'accompagnant d'une mise sous tension mécanique du câble de frein à main avec contrainte, qui va alors stopper la rotation de la pièce relais alors que le levier d'actionnement poursuit sa rotation, engendrant une mise en appui de la pièce relais contre la butée de serrage s'accompagnant d'une compression de l'élément de rappel précontraint, et un éloignement de la pièce relais du contacteur traduisant un serrage satisfaisant dudit système de frein à main. L'étape d'inactivation constitue une étape de départ à partir de laquelle le système de frein à main va être activé, et non pas une étape prenant une part active dans le déroulement du procédé d'activation.

Un système de frein à main selon l'invention présente l'avantage d'être sûr et fiable dans la mesure où il s'appuie sur une information traduisant une tension mécanique réelle du câble correspondant à un fonctionnement réel de ce système de frein à main, et non pas sur une information relative à une position approximative du levier d'actionnement, ne correspondant pas forcément à un fonctionnement efficace de ce système de frein à main.

On donne ci-après une description détaillée d'un mode de réalisation préféré d'un système de freinage selon l'invention, en se référant aux figures suivantes :
[Fig. 1] représente une vue schématique d'un système de frein à main selon l'invention, illustrant une phase de repos,
[Fig. 2] représente une vue schématique du système de frein à main de la figure 1 illustrant une phase intermédiaire d'activation de ce système,
[Fig. 3] représente une vue schématique du système de frein à main des figures 1 et 2, illustrant une phase finale d'activation de ce système,
[Fig. 4] représente une vue schématique de côté du système de frein à main des figures 1, 2 et 3, illustrant une phase de repos.

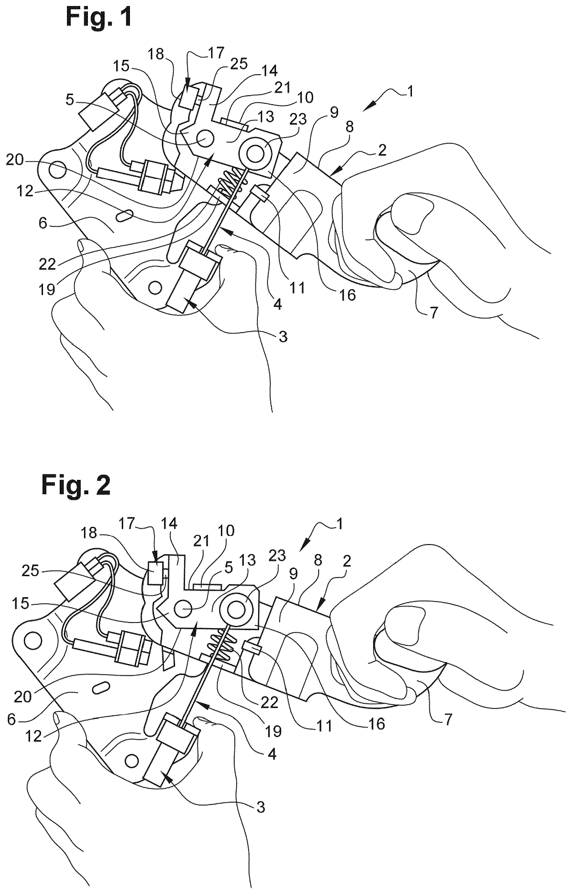

En se référant aux figures 1, 2, 3 et 4, un système de frein à main 1 selon l'invention comprend un levier d'actionnement 2, un dispositif de freinage 3 des roues d'un véhicule et un câble 4 de frein à main. Une mise en rotation du levier d'actionnement 2 autour d'un axe de rotation 5 solidarisé à un élément de structure 6 du véhicule, va engendrer une tension mécanique du câble 4 de frein à main destinée à activer le dispositif de freinage 3 des roues du véhicule.

Pour lever toute ambiguïté, la pièce portant la référence 3 sur les différentes figures ne correspond pas stricto sensu au dispositif de freinage 3 mais à une pièce située en amont de ce dispositif de freinage et apte à piloter ledit dispositif de freinage. Par extension, cette référence 3 sera considérée comme désignant le dispositif de freinage.

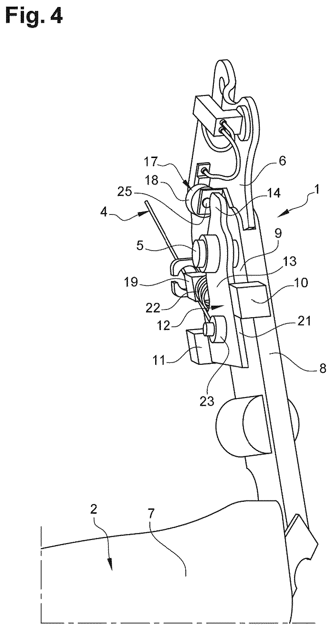

En se référant à la figure 4, le levier d'actionnement 2 comprend un premier segment 7 servant d'organe de préhension et un deuxième segment 8 destiné à supporter une partie du mécanisme de mise en œuvre d'un système de frein à main 1 selon l'invention, lesdits deux segments 7, 8 étant sensiblement perpendiculaires. Le terme « sensiblement perpendiculaires » signifie « perpendiculaires à plus ou moins 10° ». Le premier segment 7 est préférentiellement lisse et présente une géométrie particulière favorisant sa manipulation avec une main, pour faciliter son déplacement autour de l'axe de rotation 5. Le deuxième segment 8 est assimilable à une plateforme plane et de faible épaisseur, dont une première surface 9 va supporter une partie du mécanisme de mise en œuvre d'un système de frein à main 1 selon l'invention, et dont une deuxième surface qui est parallèle à ladite première surface 9 sera vierge de tout élément fonctionnel. Ce deuxième segment 8 est monté pivotant autour de l'axe de rotation 5 du levier d'actionnement 2.

En se référant aux figures 1, 2, 3 et 4, une butée de repos 10 et une butée de serrage 11 sont solidarisées au deuxième segment 8 du levier d'actionnement 2. Ces deux butées 10, 11 sont représentées par deux pièces solides distinctes, solidarisées au deuxième segment 8 en saillant de la première surface 9. Préférentiellement, ces deux butées 10, 11 saillent de ladite première surface 9 en étant perpendiculaires à celle-ci. Une pièce relais 12 plane et de faible épaisseur est montée en rotation autour de l'axe de rotation 5 du levier d'actionnement 2. Le deuxième segment 8 du levier d'actionnement 2 et la pièce relais 12 sont montés en rotation autour de l'axe de rotation 5 du levier d'actionnement 2 de façon indépendante. Autrement dit, une mise en rotation du deuxième segment 8 autour de cet axe de rotation 5 n'entraine pas systématiquement une mise en rotation simultanée de la pièce relais 12 dans le même sens et avec la même amplitude angulaire, sauf si temporairement il existe une interaction entre ces deux pièces 8, 12.

En se référant à la figure 4, la pièce relais 12, une fois qu'elle a été montée en rotation autour de l'axe de rotation 5, s'inscrit dans un plan qui est parallèle à un plan dans lequel s'inscrit le deuxième segment 8 du levier d'actionnement 2.

En se référant aux figures 1, 2 et 3 la pièce relais 12 comprend schématiquement un corps allongé 13 prolongé par une extension 14. Ce corps allongé 13 présente une première extrémité 15 à partir de laquelle prend naissance l'extension 14 et à travers laquelle passe l'axe de rotation 5, et une deuxième extrémité 16 à laquelle est fixée une extrémité du câble 4 de frein à main. De façon plus précise, un gond 23 est solidarisé à cette deuxième extrémité 16, et est destiné à recevoir l'extrémité du câble 4 de frein à main. La première extrémité 15 et la deuxième extrémité 16 du corps allongé 13 sont à considérer par rapport à un axe longitudinal dudit corps allongé 13. Le corps allongé 13 est délimité par un premier bord longitudinal 20 et par un deuxième bord longitudinal 21, lesdits deux bords étant parallèles.

En se référant aux figures 1, 2, 3 et 4, le deuxième segment 8 du levier d'actionnement 2 supporte un contacteur électrique 17 comprenant un corps 18 dans lequel est monté un pion mobile 25. Ce pion 25 est apte à être translaté dans le corps 18 entre une position rentrée pour laquelle il est au moins partiellement inclus dans ledit corps 18, et une position déployée pour laquelle il saille de celui-ci. Par défaut, sous l'effet d'un organe précontraint placé dans le corps 13 et en l'absence de toute sollicitation, le pion 18 occupe la position déployée.

En se référant aux figures 1, 2, 3 et 4, le deuxième segment 8 supporte une butée d'arrêt 19 saillant de la première surface 9 dudit deuxième segment 8. Préférentiellement, cette butée d'arrêt 19 saille perpendiculairement de ladite première surface 9. Un ressort 22 à spirales est inséré entre cette butée d'arrêt 19 et le premier bord longitudinal 20 du corps allongé 13 de la pièce relais 12.

En se référant aux figures 1 et 4, lorsque le système 1 de frein à main est au repos :
- l'extension 14 de la pièce relais est en appui contre le pion 25 du contacteur 17 électrique, plaçant ledit pion 25 dans la position rentrée,
- le deuxième bord longitudinal 21 du corps allongé 13 de la pièce relais 12 est en appui contre la butée de repos 10 sous l'effet du ressort 22 inséré entre la butée d'arrêt 19 et le premier bord longitudinal 20 du corps allongé 13 de la pièce relais 12,
- le premier bord longitudinal 20 du corps allongé est éloigné de la butée de serrage 11.

En se référant à la figure 2, lorsqu'un utilisateur souhaite utiliser le système de frein à main, il se saisit du premier segment 7 du levier d'actionnement 2 et commence à imprimer un mouvement de rotation au deuxième segment 8 autour de l'axe de rotation 5. Ce mouvement de rotation, qui est réalisé à partir de la position de repos ci-avant décrite, entraine une mise en rotation simultanée de la pièce relais 12, dans le même sens et avec sensiblement la même amplitude, puisque ladite pièce relais 12 est insérée entre le ressort 22 qui est en appui contre la butée d'arrêt 19, et la butée de repos 10. Lors de cette étape transitoire, le câble 4 de frein à main se tend sans contrainte, en n'exerçant aucune action sur le dispositif de freinage 3 des roues. Il s'agit d'une étape intermédiaire transitoire assurant une mise sous tension mécanique du câble 4 n'ayant aucune conséquence sur le dispositif de freinage 3.

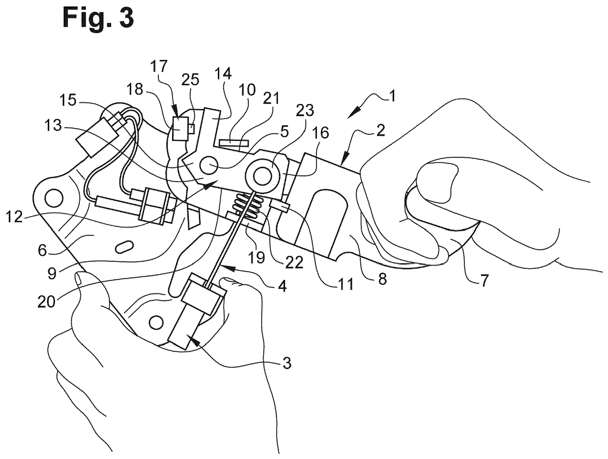

En se référant, à la figure 3, il poursuit le mouvement de rotation du deuxième segment 8 dans le même sens, toujours en manipulant le premier segment 7, cette poursuite du mouvement en rotation ayant pour but d'activer le système de freinage 1, et entrainant :
- un arrêt de la mise en rotation de la pièce relais 12 sous l'effet de la tension mécanique exercée par le câble 4, alors que le deuxième segment 8 poursuit son mouvement en rotation autour de l'axe 5,
- une mise en compression du ressort 22,
- un éloignement du deuxième bord longitudinal 21 du corps 13 de la pièce relais 12, de la butée de repos 10, et une mise en appui du premier bord longitudinal 20 dudit corps 13 contre la butée de serrage 11,
- un éloignement de l'extension 14 de la pièce relais 12, du contacteur électrique 17.

Le câble 4 de frein à main est actionné par la pièce relais 12. Le tarage du ressort 22 est adapté pour fournir un effort calibré lorsque la pièce relais 12 vient en appui contre la butée de serrage 11. Cet effort calibré permet d'obtenir la tension mécanique dans le câble 4 nécessaire à l'activation du dispositif de freinage des roues et à partir de laquelle on veut que le contacteur électrique 17 soit actionné. Autrement dit, lorsque la pièce relais 12 s'éloigne du contacteur 17 pour l'activer, on sait que le dispositif de freinage 3 des roues a été actionné efficacement puisque cet éloignement correspond à une tension mécanique du câble 4, qui est nécessaire à l'activation dudit dispositif de freinage. Lorsque le contacteur 17 a été activé au moyen d'un éloignement de la pièce relais 12, il transmet un signal au conducteur du véhicule pour l'informer que le système 1 de frein à main a été correctement activé.

## Revendications

1. Système (1) de frein à main d'un véhicule comprenant un levier d'actionnement (2) monté en rotation autour d'un premier axe (5) de rotation solidaire d'un élément de structure (6) du véhicule, un câble (4) de frein à main et un dispositif de freinage (3), ledit câble (4) étant relié au dispositif de freinage (3) et étant apte à être mis sous tension mécanique sous l'effet d'une mise en rotation du levier d'actionnement (2) autour du premier axe (5), **caractérisé en ce que** :
- il comprend une pièce relais (12) montée en rotation autour d'un deuxième axe (5) de rotation et maintenue en appui contre une butée de repos (10) solidaire du levier d'actionnement (2) au moyen d'un élément (22) de rappel précontraint, ladite pièce relais (12) étant maintenue à distance d'une butée de serrage (11) solidaire dudit levier d'actionnement (2) au moyen dudit élément de rappel (22),
- le câble (4) relie le dispositif de freinage (3) à la pièce relais (12), qui est dans un premier état d'interaction avec un contacteur (17),
- le levier d'actionnement (2) est apte à être mis en rotation pour assurer une opération de freinage, en entrainant une mise en rotation simultanée de la pièce relais (12) qui est insérée entre l'élément de rappel précontraint (22) et la butée de repos (10), ladite mise en rotation étant destinée à engendrer une première mise sous tension mécanique du câble (4) de frein sans résistance, puis une deuxième mise sous tension mécanique dudit câble (4) entrainant un arrêt de la rotation de la pièce relais (12) alors que le levier d'actionnement (2) poursuit sa rotation, de manière à engendrer une mise en appui de la pièce relais (12) contre la butée de serrage (11) s'accompagnant d'une compression de l'élément de rappel précontraint (22), et d'un deuxième état d'interaction de la pièce relais (12) avec le contacteur (17).

2. Système de frein à main selon la revendication 1,
**caractérisé en ce que** le deuxième axe est confondu avec le premier axe, de sorte que le levier d'actionnement (2) et la pièce relais (12) pivotent autour du même axe (5).

3. Système de frein à main selon l'une quelconque des revendications 1 ou 2, **caractérisé en ce que** le contacteur (17) est un capteur de position électrique comportant un ergot mobile (25) entre une position rentrée et une position déployée.

4. Système de frein à main selon la revendication 3, **caractérisé en ce que** lorsque ledit système (1) n'est pas activé, la pièce relais (12) est en contact avec l'ergot (25) en le maintenant dans la position rentrée, et **en ce que** lorsque ledit système (1) est activé pour assurer une opération de freinage, la pièce relais (12) s'éloigne de l'ergot (25) permettant à celui-ci d'occuper la position déployée.

5. Système de frein à main selon l'une quelconque des revendications 1 à 4, **caractérisé en ce que** la pièce relais (12) présente un corps principal (13) allongé et une extension (14) qui est inclinée par rapport audit corps (13), et **en ce que** ladite extension (14) interagit avec le contacteur (17).

6. Système de frein à main selon l'une quelconque des revendications 1 à 5, **caractérisé en ce que** l'élément de rappel précontraint est un ressort (22) dont une première extrémité est en appui contre la pièce relais (12) et dont une deuxième extrémité est en appui contre une butée d'arrêt (19) solidarisée au levier d'actionnement (2).

7. Système de frein à main selon l'une quelconque des revendications 1 à 6, **caractérisé en ce que** la butée de repos (10) et la butée de serrage (11) sont solidarisées au levier d'actionnement (2) de manière à garantir plus facilement que ces butées (10, 11) aient des appuis sensiblement plans sur les surfaces en regard sur la pièce relais (12).

8. Système de frein à main selon les revendications 6 et 7, **caractérisé en ce que** la butée d'arrêt (19) est sensiblement parallèle à un bord longitudinal (20) de la pièce relais (12) contre lequel le ressort (22) vient en appui lorsque le levier a pivoté pour assurer une opération de freinage.

9. Système de frein à main selon l'une quelconque des revendications 1 à 8, **caractérisé en ce que** le levier d'actionnement (2) présente deux segments perpendiculaires, dont un premier segment (7) sert uniquement d'élément de préhension et dont un deuxième segment (8) permet une mise en œuvre de la fonction de freinage par l'intermédiaire de la pièce relais (12).

10. Procédé d'activation d'un système (1) de frein à main selon l'une quelconque des revendications 1 à 9, **caractérisé en ce qu'**il comprend les étapes suivantes :
- une étape d'inactivation du système (1) de frein à main pour laquelle la pièce relais (12) est en appui contre la butée de repos (10) et contre le contacteur (17),
- une étape de mise en rotation du levier d'actionnement (2) autour du premier axe (5) de rotation, entrainant une mise en rotation simultanée de la pièce relais (12) qui est insérée entre l'élément de rappel précontraint (22) et la butée de repos (10), ladite étape s'accompagnant d'une tension du câble (4) de frein sans contrainte,
- une étape de poursuite de la mise en rotation du levier d'actionnement (2) s'accompagnant d'une mise sous tension mécanique du câble (4) de frein à main avec contrainte, qui va alors stopper la rotation de la pièce relais (12) alors que le levier d'actionnement (2) poursuit sa rotation, engendrant une mise en appui de la pièce relais (12) contre la butée de serrage (11) s'accompagnant d'une compression de l'élément de rappel (22) précontraint, et un éloignement de la pièce relais (12) du contacteur (17) traduisant un serrage satisfaisant dudit système (1) de frein à main..

## Patentansprüche

1. Handbremssystem (1) für ein Fahrzeugs, das einen Betätigungshebel (2) aufweist, der um eine erste Drehachse (5) drehbar gelagert ist, die fest mit einem Strukturelement (6) des Fahrzeugs verbunden ist, ein Handbremsseil (4) und eine Bremsvorrichtung (3), wobei das Seil (4) mit der Bremsvorrichtung (3) verbunden ist und durch die Drehung des Betätigungshebels (2) um die erste Achse (5) mechanisch gespannt werden kann, **dadurch gekennzeichnet, dass**:
- es ein Relaisteil (12) aufweist, das um eine zweite Drehachse (5) drehbar gelagert ist und mittels eines vorgespannten Rückstellelements (22) gegen einen mit dem Betätigungshebel (2) verbundenen Ruheanschlag (10) gedrückt wird, wobei das Relaisteil (12) mit Hilfe des Rückstellelements (22) in einem Abstand zu einem mit dem Betätigungshebel (2) verbundenen Klemmanschlag (11) gehalten wird,
- das Kabel (4) die Bremsvorrichtung (3) mit dem Relaisteil (12) verbindet, das sich in einem ersten Zustand der Wechselwirkung mit einem Kontaktgeber (17) befindet,
- der Betätigungshebel (2) gedreht werden kann, um einen Bremsvorgang auszulösen, wobei gleichzeitig das Relaisteil (12) gedreht wird, das zwischen dem vorgespannten Rückstellelement (22) und dem Ruheanschlag (10) eingesetzt ist, wobei diese Drehung dazu dient, zunächst eine erste mechanische Spannung des Bremsseils (4) ohne Widerstand zu erzeugen und anschließend eine zweite mechanische Spannung des Seils (4) zu erzeugen, die zu einem Stillstand der Drehung des Relaisteils (12) führt, während der Betätigungshebel (2) seine Drehung fortsetzt, um ein Drücken des Relaisteils (12) gegen den Klemmanschlag (11) zu bewirken, begleitet von einer Kompression des vorgespannten Rückstellelements (22) und einem zweiten Zustand der Wechselwirkung des Relaisteils (12) mit dem Kontaktgeber (17).

2. Handbremssystem nach Anspruch 1, **dadurch gekennzeichnet, dass** die zweite Achse mit der ersten Achse zusammenfällt, sodass der Betätigungshebel (2) und das Relaisteil (12) um dieselbe Achse (5) schwenkbar sind.

3. Handbremssystem nach einem der Ansprüche 1 oder 2, **dadurch gekennzeichnet, dass** der Kontaktgeber (17) ein elektrischer Positionssensor ist, der einen beweglichen Stift (25) aufweist, der zwischen einer eingefahrenen Position und einer ausgefahrenen Position beweglich ist.

4. Handbremssystem nach Anspruch 3, **dadurch gekennzeichnet, dass** bei Nichtaktivierung des Systems (1) das Relaisteil (12) mit dem Stift (25) in Kontakt steht und ihn in der eingefahrenen Position hält, und dass, wenn das System (1) aktiviert wird, um einen Bremsvorgang sicherzustellen, sich das Relaisteil (12) von dem Stift (25) entfernt, wodurch dieser die ausgefahrene Position einnehmen kann.

5. Handbremssystem nach einem der Ansprüche 1 bis 4, **dadurch gekennzeichnet, dass** das Relaisteil (12) einen länglichen Hauptkörper (13) und eine Verlängerung (14) aufweist, die gegenüber dem Körper (13) geneigt ist, und dass die Verlängerung (14) mit dem Kontaktgeber (17) zusammenwirkt.

6. Handbremssystem nach einem der Ansprüche 1 bis 5, **dadurch gekennzeichnet, dass** das vorgespannte Rückstellelement eine Feder (22) ist, deren erstes Ende gegen das Relaisteil (12) drückt und deren zweites Ende gegen einen mit dem Betätigungshebel (2) fest verbundenen Endanschlag (19) drückt.

7. Handbremssystem nach einem der Ansprüche 1 bis 6, **dadurch gekennzeichnet, dass** der Ruheanschlag (10) und der Klemmanschlag (11) fest mit dem Betätigungshebel (2) verbunden sind, um leichter zu gewährleisten, dass diese Anschläge (10, 11) im Wesentlichen ebene Auflageflächen auf den gegenüberliegenden Flächen des Relaisteils (12) haben.

8. Handbremssystem nach den Ansprüchen 6 und 7, **dadurch gekennzeichnet, dass** der Endanschlag (19) im Wesentlichen parallel zu einer Längskante (20) des Relaisteils (12) verläuft, gegen die die Feder (22) drückt, wenn der Hebel zur Durchführung eines Bremsvorgangs geschwenkt wird.

9. Handbremssystem nach einem der Ansprüche 1 bis 8, **dadurch gekennzeichnet, dass** der Betätigungshebel (2) zwei senkrecht zueinander stehende Segmente aufweist, von denen ein erstes Segment (7) ausschließlich als Griffelement dient und ein zweites Segment (8) über das Relaisteil (12) die Bremsfunktion auslöst.

10. Verfahren zum Aktivieren eines Handbremssystems (1) nach einem der Ansprüche 1 bis 9, **dadurch gekennzeichnet, dass** es die folgenden Schritte aufweist:
- einen Schritt zum Deaktivieren des Handbremssystems (1), bei dem das Relaisteil (12) gegen den Ruheanschlag (10) und gegen den Kontaktgeber (17) drückt,
- einen Schritt zum Drehen des Betätigungshebels (2) um die erste Drehachse (5), was zu einem gleichzeitigen Drehen des Relaisteils (12) führt, das zwischen dem vorgespannten Rückstellelement (22) und dem Ruheanschlag (10) eingesetzt ist, wobei dieser Schritt mit einer Spannung des Bremsseils (4) ohne Belastung einhergeht,
- einen Schritt zum weiteren Drehen des Betätigungshebels (2), was mit einer mechanischen Spannung des Handbremsseils (4) mit Belastung einhergeht, wodurch das Drehen des Relaisteils (12) gestoppt wird, während der Betätigungshebel (2) sich weiterdreht, wodurch das Relaisteil (12) gegen den Klemmanschlag (11) gedrückt wird, was mit einer Kompression des vorgespannten Rückstellelements (22) einhergeht, und das Relaisteil (12) vom Kontaktgeber (17) entfernt wird, was ein zufriedenstellendes Festziehen des Handbremssystems (1) anzeigt.

## Claims

1. Vehicle handbrake system (1) comprising an actuating lever (2) mounted in rotation about a first axis (5) of rotation secured to a structural element (6) of the vehicle, a handbrake cable (4) and a braking device (3), said cable (4) being connected to the braking device (3) and being capable of being placed under mechanical tension under the effect of a rotation of the actuating lever (2) about the first axis (5), **characterized in that**:
- it comprises a relay part (12) mounted in rotation about a second axis (5) of rotation and held in abutment against a rest stop (10) secured to the actuating lever (2) by means of a preloaded return element (22), said relay part (12) being kept at a distance from a clamping stop (11) secured to said actuating lever (2) by means of said return element (22),
- the cable (4) connects the braking device (3) to the relay part (12), which is in a first state of interaction with a contactor (17),
- the actuating lever (2) is capable of being rotated to ensure a braking operation, causing simultaneous rotation of the relay part (12) which is inserted between the preloaded return element (22) and the rest stop (10), said rotation being intended to cause a first mechanical tensioning of the brake cable (4) without resistance, then a second mechanical tensioning of said cable (4), causing the rotation of the relay part (12) to stop while the actuating lever (2) continues its rotation, so as to cause the relay part (12) to bear against the clamping stop (11), accompanied by a compression of the preloaded return element (22), and by a second state of interaction of the relay part (12) with the contactor (17).

2. Handbrake system according to Claim 1, **characterized in that** the second axis coincides with the first axis, so that the actuating lever (2) and the relay part (12) pivot about the same axis (5).

3. Handbrake system according to either one of Claims 1 and 2, **characterized in that** the contactor (17) is an electrical position sensor comprising a movable lug (25) which can move between a retracted position and a deployed position.

4. Handbrake system according to Claim 3, **characterized in that** when said system (1) is not activated, the relay part (12) is in contact with the lug (25), keeping it in the retracted position, and **in that** when said system (1) is activated to ensure a braking operation, the relay part (12) moves away from the lug (25), allowing the latter to occupy the deployed position.

5. Handbrake system according to any one of Claims 1 to 4, **characterized in that** the relay part (12) has an elongate main body (13) and an extension (14) which is inclined with respect to said body (13), and **in that** said extension (14) interacts with the contactor (17).

6. Handbrake system according to any one of Claims 1 to 5, **characterized in that** the preloaded return element is a spring (22), a first end of which bears against the relay part (12) and a second end of which bears against a limit stop (19) secured to the actuating lever (2).

7. Handbrake system according to any one of Claims 1 to 6, **characterized in that** the rest stop (10) and the clamping stop (11) are secured to the actuating lever (2) so as to more easily ensure that these stops (10, 11) have substantially planar bearing contacts on the facing surfaces on the relay part (12).

8. Handbrake system according to Claims 6 and 7, **characterized in that** the limit stop (19) is substantially parallel to a longitudinal edge (20) of the relay part (12) against which the spring (22) comes to bear when the lever has pivoted to ensure a braking operation.

9. Handbrake system according to any one of Claims 1 to 8, **characterized in that** the actuating lever (2) has two perpendicular segments, a first segment (7) of which serves solely as a gripping element and a second segment (8) of which allows implementation of the braking function via the relay part (12).

10. Method for activating a handbrake system (1) according to any one of Claims 1 to 9, **characterized in that** it comprises the following steps:
- a step of inactivating the handbrake system (1) in which the relay part (12) bears against the rest stop (10) and against the contactor (17),
- a step of rotating the actuating lever (2) about the first axis (5) of rotation, causing simultaneous rotation of the relay part (12) which is inserted between the preloaded return element (22) and the rest stop (10), said step being accompanied by a tension of the brake cable (4) without stress,
- a step of continuing the rotation of the actuating lever (2) accompanied by a mechanical tensioning of the handbrake cable (4) with stress, which will then stop the rotation of the relay part (12) while the actuating lever (2) continues its rotation, causing the relay part (12) to bear against the clamping stop (11) accompanied by a compression of the preloaded return element (22), and separation of the relay part (12) from the contactor (17) indicating satisfactory clamping of said handbrake system (1).
